# EUROPEAN PATENT APPLICATION

(11) **EP 2 607 649 A2**
(43) Date of publication of application: **26.06.2013**
(21) Application number: 12196684.0
(22) Date of filing: 12.12.2012
(51) Int. Cl.: F02C 1/06, F02C 3/34

(54) **System and method for controlling oxygen emissions from a gas turbine**

(30) Priority: 22.12.2011 US 201113334879
(71) Applicant: General Electric Company, Schenectady, New York 12345 (US)
(72) Inventor: Snook, Daniel David, Opelika, AL 36801 (US); Intile, John Charles, Greenville, SC 29615 (US)
(74) Representative: Cleary, Fidelma

(57) **Abstract**

A system for controlling oxygen emissions from a gas turbine (12) includes a combustor (18), a plenum (56) downstream from the combustor (18), and a turbine (20) downstream from the plenum (56) that produces an exhaust. A compressor (48) downstream from the turbine (20) receives the exhaust (46) and produces a compressed exhaust (52). A compressed exhaust plenum (54) downstream from the compressor (48) provides fluid communication to the combustor (18) and the plenum (54). A method for controlling oxygen emissions from a gas turbine (12) includes flowing an exhaust from a turbine (20) and increasing the pressure of the exhaust to produce a compressed exhaust (52). The method further includes flowing a first portion of the compressed exhaust (52) to an inlet of a combustor (48) and flowing a second portion of the compressed exhaust (52) to a plenum (54) between the turbine (20) and the combustor (18).

## Description

### FIELD OF THE INVENTION

The present invention generally involves a system and method for controlling oxygen emissions from a gas turbine.

### BACKGROUND OF THE INVENTION

One or more gas turbines may often be combined with a heat recovery system to produce a more efficient power generation system having lower emissions. A typical gas turbine includes a compressor at the front, one or more combustors circumferentially arranged around the middle, and a turbine at the rear. The compressor imparts kinetic energy to a working fluid (e.g., air) to bring it to a highly energized state. The compressed working fluid exits the compressor and flows to the combustors where it mixes with fuel and ignites to generate combustion gases having a high temperature and pressure. The combustion gases flow to the turbine where they expand to produce work. For example, expansion of the combustion gases in the turbine may rotate a shaft connected to a generator to produce electricity.

The heat recovery system may be located downstream from the turbine to extract additional heat or work from the exhaust gases exiting the turbine. The heat recovery system may include, for example, a steam generator, a steam turbine, and a condenser. The exhaust gases exiting the turbine may flow through the steam generator to produce steam, and the steam may flow through the steam turbine where it expands to produce work. The condenser may condense the steam exiting the steam turbine into condensate, which in turn may be returned to the steam generator, and the cycle repeats.

In some combined cycle power plants, the exhaust gases exiting the steam generator may be recirculated back to the combustor to provide for near-stoichiometric conditions in the combustion chamber. Specifically, the oxygen content of the recirculated exhaust gases may be approximately 50%, 75%, or 90% less than the oxygen content of ambient air or the compressed working fluid exiting the compressor. Although effective at increasing the overall efficiency of the power plant while also reducing undesirable emissions, recirculating the exhaust gases through the combustor increases the complexity of the combustor design. In addition, the low oxygen content of the recirculated exhaust gases may create flame instabilities in the combustor and/or prematurely quench the combustion. Therefore, an improved system and method for recirculating exhaust gases to control the oxygen emissions from the gas turbine would be useful.

### BRIEF DESCRIPTION OF THE INVENTION

Aspects and advantages of the invention are set forth below in the following description, or may be obvious from the description, or may be learned through practice of the invention.

In one aspect, the present invention resides in a system for controlling oxygen emissions from a gas turbine. The system includes a combustor that produces combustion gases, a plenum downstream from the combustor that receives the combustion gases from the combustor, and a turbine downstream from the plenum that receives the combustion gases from the plenum and produces an exhaust. A compressor downstream from the turbine receives the exhaust and produces a compressed exhaust. A compressed exhaust plenum downstream from the compressor provides fluid communication to the combustor and the plenum.

In another aspect, the present invention resides in a system for controlling oxygen emissions from a gas turbine. The system includes a first compressor that produces a compressed working fluid, a plurality of combustors downstream from the first compressor that the compressed working fluid from the first compressor and produce combustion gases, an annular plenum downstream from the combustors that receives the combustion gases from the combustors, and a turbine downstream from the annular plenum that receives the combustion gases from the annular plenum and produces an exhaust. A second compressor downstream from the turbine receives the exhaust and produces a compressed exhaust. A compressed exhaust plenum downstream from the second compressor receives the compressed exhaust from the second compressor and provides a flow of the compressed exhaust to the combustors and to the annular plenum.

The present invention also resides in a method for controlling oxygen emissions from a gas turbine. The method includes flowing an exhaust from a turbine and increasing the pressure of the exhaust to produce a compressed exhaust. The method further includes flowing a first portion of the compressed exhaust to an inlet of a combustor and flowing a second portion of the compressed exhaust to a plenum between the turbine and the combustor.

Those of ordinary skill in the art will better appreciate the features and aspects of such embodiments, and others, upon review of the specification.

### BRIEF DESCRIPTION OF THE DRAWINGS

Embodiments of the present invention will now be described, by way of example only, with reference to the accompanying drawings, in which:
Fig. 1 is a simplified block diagram of an exemplary combined cycle power plant according to one embodiment of the present invention;
Fig. 2 is a side cross-section view of a portion of an exemplary gas turbine according to one embodiment of the present invention; and
Fig. 3 is a downstream axial cross-section view of the gas turbine shown in Fig. 2 taken along line A-A.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention include a system and method for recirculating exhaust gases to control oxygen emissions from a gas turbine. In particular embodiments of the present invention, a compressor supplies one or more combustors in the gas turbine with a compressed working fluid, and a portion of recirculated exhaust gas is supplied to a head end of one or more combustors to combine with fuel and the compressed working fluid at near-stoichiometric conditions. The remainder of the recirculated exhaust gas may be supplied to a plenum between the one or more combustors and a turbine. Dividing eh recirculated exhaust gas between the head end and the plenum simplifies the complexity in the head end design, reduces flame instability in the combustor, and/or prevents premature flame quenching while still controlling the oxygen emissions of the gas turbine.

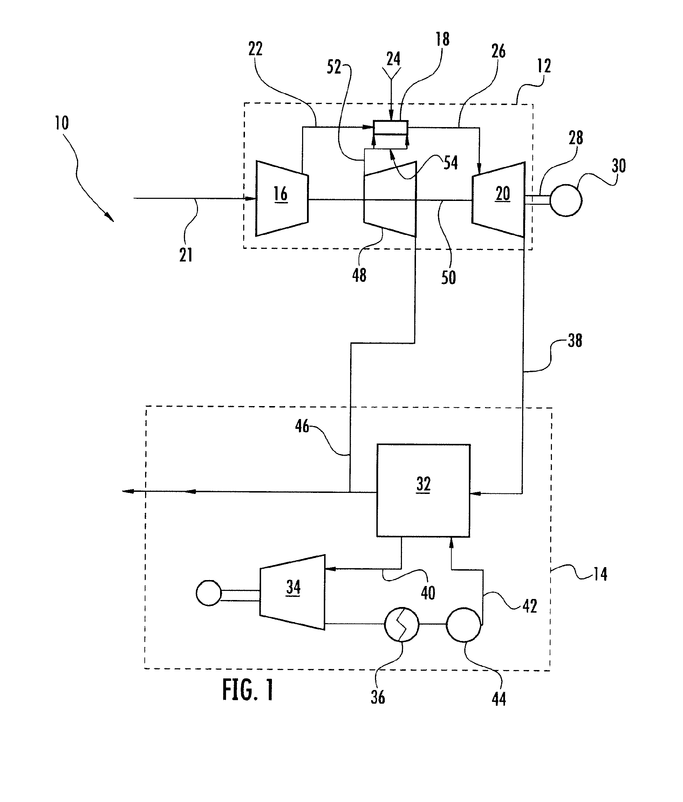

Fig. 1 provides a simplified block diagram of an exemplary combined cycle power plant according to one embodiment of the present invention. The combined cycle power plant 10 generally includes a gas turbine 12 connected to a heat recovery system 14 as is known in the art. For example, as shown in Figure 1, the gas turbine 12 includes a first compressor 16, at least one combustor 18 downstream of the first compressor 16, and a turbine 20 downstream of the combustor 18. As used herein, the terms "upstream" and "downstream" refer to the relative location of components in a fluid pathway. For example, component A is upstream of component B if a fluid flows from component A to component B. Conversely, component B is downstream of component A if component B receives a fluid flow from component A. Ambient air 21 flows into the first compressor 16, and the first compressor 16 produces a compressed working fluid 22 which flows to the combustor 18. The combustor 18 generally combines the compressed working fluid 22 with a supply of fuel 24 and/or diluent and ignites the mixture to produce combustion gases 26. The supplied fuel 24 may be any suitable fuel used by commercial combustion engines, such as blast furnace gas, coke oven gas, natural gas, vaporized liquefied natural gas (LNG), propane, and any form of liquid fuel. The diluent may be any fluid suitable for diluting or cooling the fuel, such as compressed air, steam, nitrogen, or another inert gas. The combustion gases 26 flow to the turbine 20 where they expand to produce work. For example, expansion of the combustion gases 26 in the turbine 20 may rotate a shaft 28 connected to a generator 30 to produce electricity.

The heat recovery system 14 may be retrofitted or added to existing gas turbines to increase the overall thermodynamic efficiency of the gas turbine while also reducing oxygen emissions. The heat recovery system 14 may include, for example, a heat exchanger 32, such as a steam generator, a steam turbine 34, and a condenser 36. The heat exchanger 32 or steam generator may be located downstream from the turbine 20, and exhaust gases 38 from the turbine 20 may flow through the steam generator 32 to produce steam 40. The steam turbine 34 may be located downstream of the steam generator 32, and the steam 40 from the steam generator 32 expands in the steam turbine 34 to produce work. The condenser 36 may be located downstream of the steam turbine 34 and upstream of the steam generator 32 to condense the steam 40 exiting the steam turbine 34 into condensate 42 which is returned to the steam generator 32. One or more condensate pumps 44 between the condenser 36 and the steam generator 32 are in fluid communication with the steam generator 32 to provide the condensate 42 from the condenser 36 to the steam generator 32.

As shown in Figure 1, a portion of the exhaust gases 46 exiting the steam generator 32 may be recirculated back through the gas turbine 12 to reduce the oxygen content of the gas turbine 12 emissions. Specifically, the recirculated exhaust gases 46 may flow to a second compressor 48 downstream from the turbine 20 and steam generator 32. The second compressor 48 may be separately powered, or, as shown in Fig. 1, the second compressor 48 may be coaxial with the first compressor 16 and/or turbine 20. In this manner, the turbine 20 may drive a rotor 50 that commonly drives both the first and second compressors 16, 48.

The second compressor 48 produces a compressed exhaust 52 having substantially lower oxygen levels than the ambient air 21 entering the first compressor 16 or the compressed working fluid 22 exiting the first compressor 16. In particular embodiments, the oxygen content of the compressed exhaust 52 may be approximately 50%, 75%, or 90% less than the oxygen content of the ambient air 21 entering the first compressor 16 or compressed working fluid 22 exiting the first compressor 16. The second compressor 48 supplies the compressed exhaust 52 to a compressed exhaust plenum 54 downstream from the second compressor 48.

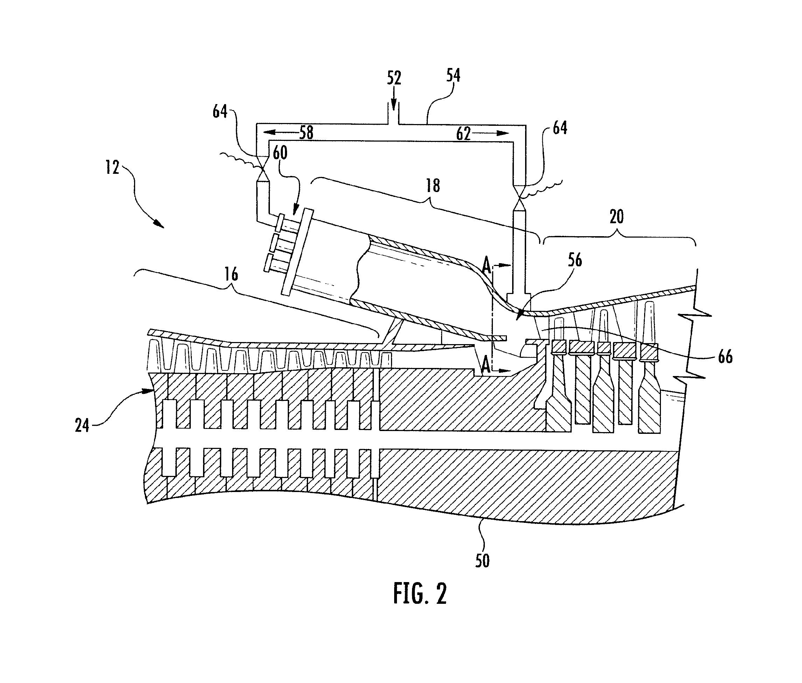

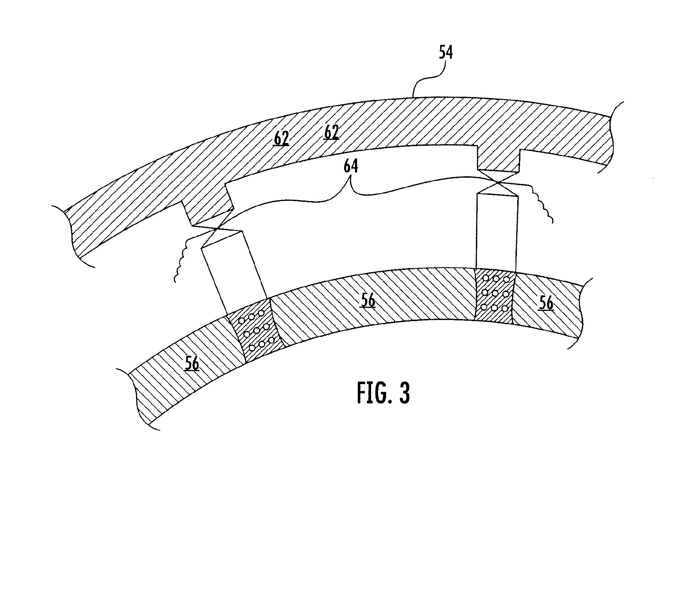

Fig. 2 provides a side cross-section view of a portion of an exemplary gas turbine 12 according to one embodiment of the present invention, and Fig. 3 provides a downstream axial cross-section view of the gas turbine 12 shown in Fig. 2 taken along line A-A. The combustors 18 may be circumferentially arranged around the rotor 50 between the first compressor 16 and the turbine 20, and the combustion gases 26 may flow from each combustor 18 through a plenum 56 that annularly surrounds the rotor 50 between the combustors 18 and the turbine 20. As shown most clearly in Fig. 2, the compressed exhaust plenum 54 may provide fluid communication to the combustors 18 and the annular plenum 56 downstream from the combustors 18. In this manner, a first portion of the compressed exhaust 58 may flow to an inlet 60 of the combustors 18, and a second portion of the compressed exhaust 62 may flow to the annular plenum 56 between the turbine 20 and the combustors 18. The first portion of the compressed exhaust 5 8 combines with the compressed working fluid 22 and fuel 24 in the combustors 18 to provide near-stoichiometric combustion that enhances combustor efficiency and/or reduces undesirable emissions without adversely affecting the combustion flame stability or prematurely quenching the combustion flame. The second portion of the compressed exhaust 62 combines with the combustion gases 26 in the annular plenum 56 to increase flow through the turbine 20 and thus the output of the gas turbine 12.

As shown in Figs. 2 and 3, the compressed exhaust plenum 54 may further include means for regulating the flow of the compressed exhaust 52 through the compressed exhaust plenum 54. The means may include any suitable mechanical device known to one of ordinary skill in the art for regulating fluid flow through a plenum. For example, as shown in Figs. 2 and 3, the means may include one or more valves 64 in the compressed exhaust plenum 54 that open or close to adjust the proportion of the compressed exhaust 52 that flows to the inlet 60 of the combustors 18 or the annular plenum 56. The valves 64 may be remotely operated based on various operating parameters of the gas turbine 12. For example, a temperature or pressure of individual combustors 18, the annular plenum 56, and/or first stage nozzles 66 of the turbine 20 may be used to open or close to the valves 64 to adjust the proportion of the compressed exhaust 52 that flows through the combustors 18 or bypasses the combustors 18 to flow directly into the annular plenum 56. Alternately, or in addition, a power level of the first compressor 16, the combustors 18, and/or the turbine 20 may be used to position the valves 66 to achieve the desired flow rate of the compressed exhaust 52 through the combustors 18 or the annular plenum 56. One or ordinary skill in the art will readily appreciate that multiple alternate combinations of pressure, temperature, power, and/or other system parameters may be used to regulate the flow of the compressed exhaust 52, and the present invention is not limited to any particular combination unless specifically recited in the claims.

The embodiments shown in Figs. 1-3 may also provide a method for controlling oxygen emissions from the gas turbine 12. The method may include flowing the exhaust 38 from the turbine 20 and increasing the pressure of the exhaust 38 to produce the compressed exhaust 52. The method may further include flowing the first portion of the compressed exhaust 58 to the inlet 60 of the combustors 18 and flowing the second portion of the compressed exhaust 62 to the plenum 56 between the turbine 20 and the combustors 18. Particular embodiments may further remove heat from the exhaust 38 flowing from the turbine 20, such as through the use of the steam generator 32 in the heat recovery system 14. In still further embodiments, the method may regulate the flow of the first or second portions of the compressed exhaust 58, 62 according to a pressure, temperature, and/or power level of the gas turbine 12.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A system for controlling oxygen emissions from a gas turbine (12), comprising:
a. at least one combustor (18), wherein the combustor produces combustion gases (26);
b. a plenum (56) downstream from the at least one combustor (18), wherein the plenum (56) receives the combustion gases (26) from the at least one combustor (18);
c. a turbine (20) downstream from the plenum (56), wherein the turbine (20) receives the combustion gases (26) from the plenum (56) and produces an exhaust (39);
d. a compressor (48) downstream from the turbine (20), wherein the compressor (48) receives the exhaust (46) and produces a compressed exhaust (52); and
e. a compressed exhaust (54) plenum downstream from the compressor (48), wherein the compressed exhaust plenum (54) provides fluid communication to the at least one combustor (18) and the plenum (54).

2. The system as in claim 1, further comprising means (64, 66) for regulating a flow of the compressed exhaust (52) through the compressed exhaust plenum (54).

3. The system as in claim 2, wherein the means (64) regulates the flow of the compressed exhaust (52) through the compressed exhaust plenum (54) according to a pressure or a temperature.

4. The system as in claim 2, wherein the means (66) regulates the flow of the compressed exhaust (52) through the compressed exhaust plenum (54) according to a power level of at least one of the at least one combustor (18) or the turbine (20).

5. The system as in any of claims 1 to 4, wherein the compressed exhaust (52) produced by the compressor (48) has an oxygen content at least approximately 50% less than an oxygen content of ambient air.

6. The system as in any of claims 1 to 5, wherein the compressed exhaust (52) produced by the compressor (16) has an oxygen content at least approximately 75% less than an oxygen content of ambient air.

7. The system as in any preceding claim, further comprising a heat exchanger (14) between the turbine (20) and the compressor (16), wherein the heat exchanger (14) receives the exhaust from the turbine (20).

8. The system as in any preceding claim, wherein the compressor (48) is coaxial with the turbine (20).

9. The system as in any preceding claim, further comprising:
a second compressor (16), wherein the second compressor (16) produces a compressed working fluid and wherein the at least one combustor (18) is located downstream from the second compressor (16) and receives the compressed working fluid from the second compressor (16).

10. The system of any preceding claim, wherein the compressed exhaust plenum (54) receives the compressed exhaust from the compressor (48) and provides a flow of the compressed exhaust (52) to the at least one combustor (18) and to the plenum (56).

11. The system of any preceding claim, wherein the plenum (56) is an annular plenum.

12. A method for controlling oxygen emissions from a gas turbine (12) comprising:
a. flowing an exhaust (36) from a turbine (20);
b. increasing the pressure of the exhaust (36) to produce a compressed exhaust (52);
c. flowing a first portion (58) of the compressed exhaust (52) to an inlet (60) of a combustor (18); and
d. flowing a second portion (62) of the compressed exhaust to a plenum (56) between the turbine (20)and the combustor (18).

13. The method as in claim 12, further comprising removing heat from the exhaust (36) flowing from the turbine (20).

14. The method as in claim 12 or 13, further comprising regulating the flow of at least one of the first (58) or second (62) portions of the compressed exhaust (52) according to a pressure or a temperature.

15. The method as in claim 12 or 13, further comprising regulating the flow of at least one of the first (58) or second (62) portions of the compressed exhaust (52)according to a power level of the combustor (18) or the turbine (20).
